# EUROPÄISCHE PATENTANMELDUNG

(11) **EP 3 483 430 A1**
(43) Veröffentlichungstag der Anmeldung: **15.05.2019**
(21) Anmeldenummer: 17201255.1
(22) Anmeldetag: 13.11.2017
(51) Int. Cl.: F03D 13/20, E04H 12/08, E04H 12/34, F03D 13/10

(54) **VERFAHREN UND SYSTEM ZUM MONTIEREN EINER TURMSEKTION, VERFAHREN ZUR MONTAGE EINES TURMS FÜR EINE WINDENERGIEANLAGE MIT EINER SOLCHEN TURMSEKTION UND TURM FÜR EINE WINDENERGIEANLAGE MIT EINER SOLCHEN TURMSEKTION**

(71) Anmelder: Nordex Energy GmbH, 22419 Hamburg (DE)
(72) Erfinder: Türk, Ibrahim, 22769 Hamburg (DE)
(74) Vertreter: Garrels, Sabine

(57) **Zusammenfassung**

Die Erfindung betrifft ein Verfahren zum Montieren einer längsgeteilten Turmsektion für einen Turm einer Windenergieanlage, welche aus Sektionssegmenten gebildet wird, die zuvor aus Stahlblech gefertigt wurden, jeweils umfassend stirnseitige Flanschsegmente und Längsprofile an den Längsseiten zum Verbinden benachbarter Sektionssegmente, wobei zunächst eine Teilsektion aus Sektionssegmenten in horizontaler Ausrichtung vormontiert wird und nachfolgend die Turmsektion in vertikaler Ausrichtung fertig montiert wird, sowie einen Turm für eine Windenergieanlage mit einer solchen Turmsektion. Die Erfindung betrifft auch ein System von Vorrichtungen zur Durchführung des Verfahrens.

## Beschreibung

Die Erfindung betrifft ein Verfahren zum Montieren einer längsgeteilten Turmsektion für einen Turm einer Windenergieanlage, welche aus einer Mehrzahl von Sektionssegmenten gebildet wird, die zuvor aus Stahlblech gefertigt wurden, jeweils umfassend stirnseitige Flanschsegmente und Längsprofile an den Längsseiten zum Verbinden benachbarter Sektionssegmente, sowie einen Turm für eine Windenergieanlage mit einer solchen Turmsektion. Die Erfindung betrifft auch ein zur Durchführung des Verfahrens erforderliches System von Montagevorrichtungen.

Mit zunehmendem Bedarf an Windenergieanlagen mit höherer Leistung und somit größeren Abmessungen der Hauptkomponenten, wie Turm, Gondel und Rotorblätter, wurden die zulässigen Grenzen für Fahrzeugabmessungen, insbesondere die maximale Höhe von rund vier Metern erreicht. Auch die durch die logistische Infrastruktur gegebenen Grenzen, z.B. lichte Höhe unter Brücken, machen es erforderlich, Turmsektionen mit mehr als vier Metern Durchmesser in ihrer Längserstreckung in Segmente zu teilen. Somit werden Sektionssegmente eines Turms im Herstellerwerk vorkonfektioniert und erst am Errichtungsort zusammengebaut. Es sind verschiedene Montagekonzepte am Errichtungsort bekannt.

Die WO 2012/007226 A2 offenbart beispielsweise eine Montagevorrichtung für die Montage eines Windturbinenturms mit einem vertikal ausgerichteten Mast, mit welchem ein oder mehrere horizontal ausgerichtete Ausleger verbunden sind. Die Ausleger tragen eine Plattform oder einen Hubarbeitskorb. Weiterhin ist ein Ausleger an seinem distalen Ende mit Haltemitteln verbunden, welche ein Turmbausegment halten. Der Turmabschnitt wird um den vertikal ausgerichteten Mast herumgebaut.

Die WO 2015/158351 A1 offenbart einen Stahlturm für eine Windenergieanlage, der eine Anzahl von zylindrischen oder konischen Turmsektionen umfasst, wobei zumindest seine breiteren Sektionen in zwei oder mehr längliche Sektionssegmente unterteilt sind, die sich mittels vertikaler Flansche, die aneinander durch eine Vielzahl von Bolzen befestigt sind, zu einer vollständigen Turmsektion vereinigen, wobei die Sektionssegmente zudem obere und untere horizontale Ringflanschsegmente aufweisen, um eine Verbindung der Turmsektionen aufeinander zu ermöglichen. Für den Transport der Sektionssegmente sind dort Träger vorgesehen, die jeweils mit einem Ringflanschsegment verschraubt sind, wobei zum Lagern der Sektionssegmente diese derart übereinander gestapelt sind, dass die Träger unmittelbar aufeinander liegen.

In der DE 10 2011 076 648 A1 wird ein Verfahren zum Errichten einer Windkraftanlage mit einem Fundament und einem Turmbauwerk beschrieben, wobei zumindest ein erster Abschnitt des Turmbauwerks aus Fertigteilen auf einem Fundament erstellt wird. Über ein Kopflagerelement und ein Fußlagerelement des Fundaments werden die Fertigteile miteinander verbunden. Nach dem Verbinden der Fertigteile des ersten Abschnitts wird ein Turmdrehkran an dem Kopflagerelement horizontal verankert und anschließend ein zweiter Abschnitt des Turmbauwerks mit Hilfe des Turmdrehkrans montiert.

### Darstellung der Erfindung

Die Aufgabe der Erfindung ist es, die Komplexität der Montage zu vereinfachen, insbesondere ist für die Errichtung von mehreren Windenergieanlagen in einem Windenergieanlagenpark die Anzahl großer und somit teurer Kräne zu reduzieren und deren Verfügbarkeit zu flexibilisieren. Die Montage der Turmsektionen soll sicherer und rationeller gestaltet werden.

Die Aufgabe wird gelöst durch ein Verfahren zum Montieren einer längsgeteilten Turmsektion für einen Turm einer Windenergieanlage, welche aus mehreren Sektionssegmenten gebildet wird, die zuvor aus Stahlblech gefertigt wurden, jeweils umfassend stirnseitige Ringflanschsegmente und Längsprofile an den Längsseiten zum Verbinden benachbarter Sektionssegmente mit den Schritten,
a) Bereitstellen einer Mehrzahl von Sektionssegmenten,
b) Bereitstellen, Positionieren und Ausrichten von wenigstens zwei Montageböcken und Bereitstellen von wenigstens zwei Positioniermitteln,
c) Verbringen eines ersten Sektionssegments in seiner Längserstreckung mit seiner Außenseite nach unten gerichtet auf die Montageböcke von einem Lagerplatz oder einem Transportfahrzeug mittels wenigstens eines Krans,
d) paarweises Anschlagen der Positioniermittel an den Längsseiten des ersten Sektionssegments und wenigstens eines weiteren Sektionssegments, wobei paarweise bedeutet, dass jeweils ein erstes Element eines Paares an die Längsseite des ersten Sektionssegments und das zweite Element des Paares dazu passend an die Längsseite des wenigstens einen weiteren Sektionssegments angeschlagen werden, wobei beide Elemente eines Paares gemeinsam das Positioniermittel bilden,
e) Verbringen des wenigstens einen weiteren Sektionssegments in im Wesentlichen horizontaler Ausrichtung oberhalb des ersten Sektionssegments von einem Lagerplatz oder einem Transportfahrzeug mittels des wenigstens einen Krans,
f) Absenken des wenigstens einen weiteren Sektionssegments,
g) Einfädeln der Positioniermittel an einer ersten Längsseite des wenigstens einen weiteren Sektionssegments in die Positioniermittel an der benachbarten Längsseite des zuvor positionierten ersten Sektionssegments,
h) Verbinden der Längsprofile benachbarter Längsseiten des ersten und des wenigstens einen weiteren Sektionssegments zu einer Teilturmsektion,
i) Bereitstellen eines Flanschauflagers, insbesondere eines Ringflanschauflagers, eines Montagegestells, eines Fundamentanschlussteiladapters und/oder eines Fundamentanschlussteils,
j) Heben der Teilturmsektion von den Montageböcken, Aufrichten und Verbringen der Teilturmsektion in vertikaler Ausrichtung auf das Flanschauflager,
k) Verbinden der Teilturmsektion mit dem Flanschauflager,
l) Verbringen wenigstens eines weiteren Sektionssegments in vertikaler Ausrichtung auf das Flanschauflager von einem Lagerplatz oder einem Transportfahrzeug mittels des wenigstens einen Krans,
m) Verbinden des wenigstens einen weiteren Sektionssegments mit dem Flanschauflager und Verbinden der Längsprofile des wenigstens einen weiteren Sektionssegments mit den benachbarten Längsprofilen der Sektionssegmente der Teilturmsektion.

Eine Turmsektion wird aus einer Mehrzahl zwischen zwei und fünfundzwanzig Sektionssegmenten gebildet. Eine Teilturmsektion wird aus einer Mehrzahl von Sektionssegmenten gebildet. Dabei erfolgt das Heben einer Teilsektion, Aufrichten und Verbringen auf das Flanschlager erst dann, wenn die Teilsektion über die Hälfte der Sektionssegmente umfasst. Die Schritte d) bis g) werden bei drei Sektionssegmenten einmal durchgeführt, bei mehr als drei Sektionssegmenten entsprechend öfter wiederholt, bis mehr als die Hälfte der Sektionssegmente zu einer Teilsektion montiert ist. Entsprechend werden die Schritte j) bis k) bei drei oder vier Sektionssegmenten einmal durchgeführt, bei mehr als vier Sektionssegmenten entsprechend öfter wiederholt, bis die Turmsektion vollständig montiert ist.

Unter den Begriff "Sektionssegment" fällt im Rahmen der Erfindung sowohl ein Sektionssegment mit einer bogenförmigen Kontur bzw. einem bogenförmigen Querschnitt als auch ein Sektionssegment, das über seine Längserstreckung aus mehrfach gekantetem Stahlblech hergestellt wurde, nämlich zur Bildung einer Turmsektion mit polygonaler Grundfläche.

Unter den Begriff "Flanschsegment" fällt im Rahmen der Erfindung sowohl ein Flanschsegment mit einer bogenförmigen Kontur bzw. einem bogenförmigen Querschnitt, wie ein Ringflanschsegment, als auch ein Flanschsegment, welches in einer Draufsicht eine Mehrzahl gerader Abschnitte aufweist, die über einen stumpfen Winkel miteinander verbunden sind, insbesondere geeignet zur Verbindung mit einer und/oder zur Bildung einer Turmsektion mit polygonaler Grundfläche. Unter polygonaler Grundfläche wird im Rahmen der Erfindung ein Vieleck mit mehr als vier Ecken verstanden.

Unter den Begriff "Flanschauflager" wird im Rahmen der Erfindung eine Unterbaukonstruktion für eine Turmsektion verstanden, nämlich zum einen in der Form und zum anderen in der konstruktiven Ausgestaltung. Die Form kann sowohl polygonal als auch kreis- oder kreisringförmig sein. Zur konstruktiven Ausgestaltung seien beispielhaft genannt: ein Ankerkorb, ein Fundamentanschlussteil, ein Fundamentadapter, ein Fundamentanschlussteiladapter oder ein Montagegestell.

Unter den Begriff "Montagebock" wird im Rahmen der Erfindung eine Unterkonstruktion zum Montieren einer Turmsektion verstanden, hierunter können sowohl starre Rahmen und Gestelle fallen, als auch Montagevorrichtungen mit integrierten Schwenk- und/oder Drehantrieben, als auch Rollenlagerböcke ohne und mit Rollenantrieben.

Eine bevorzugte Fortbildung des Verfahrens umfasst vor dem Schritt d) die zusätzlichen Schritte:
- Bereitstellen einer Mehrzahl von längenveränderbaren Streben,
- Montieren der längenveränderbaren Streben an direkt gegenüberliegenden Längsprofilen jedes Sektionssegments und/oder
- Einstellen der längenveränderbaren Streben, so dass der Abstand der jeweiligen Längsprofile einem vorbestimmten Maß entspricht.

Das Einstellen der längenveränderbaren Streben auf ein vorbestimmtes Maß stellt auf besonders einfache Weise sicher, dass die Längsprofile jedes Sektionssegments mit hoher Genauigkeit parallel verlaufen und der Einsatz von zusätzlichen Ausrichtwerkzeugen verzichtbar ist. Der vorgenannte Verfahrensschritt "Montieren und Einstellen einer Mehrzahl von längenveränderbaren Streben" kann an dem Errichtungsort oder bereits im Herstellerwerk erfolgen.

Bei einer Weiterbildung des erfindungsgemäßen Verfahrens erfolgen vor dem Schritt e) die zusätzlichen Schritte:
- Montieren von jeweils zwei Führungsplatten an den Flanschsegmenten des ersten Sektionssegments,
- Einfädeln des wenigstens einen weiteren Sektionssegments zwischen die Führungsplatten des ersten oder des zuvor auf den Montageböcken abgelegten Sektionssegments.

Eine vorteilhafte Weiterbildung des Verfahrens ist durch die zusätzlichen Schritte nach dem Schritt f) und vor dem Schritt g) gekennzeichnet:
- Bereitstellen von wenigstens zwei längenveränderbaren Stützmitteln,
- Anschlagen jeweils eines längenveränderbaren Stützmittels an der den Positioniermitteln gegenüberliegenden zweiten Längsseite des ersten und des wenigstens einen weiteren Sektionssegments,
- Anheben der freien Längsseite des wenigstens einen weiteren Sektionssegments mittels des wenigstens einen Krans und
- Aufklappen und/oder Ausfahren der Stützmittel auf ein vorbestimmtes Maß.

Besonders bevorzugt ist nach dem Schritt g) ein Drehen der verbundenen Sektionssegmente einer Teilturmsektion um ihre Längsachse auf den Montageböcken vorgesehen, bis die äußeren Längsseiten der verbundenen Sektionssegmente in einer Ebene oberhalb ihres Schwerpunkts, bevorzugt in einer horizontalen Ebene liegen und eine nach oben offene Teilturmsektion bilden. Hierdurch wird eine gute Zugänglichkeit für das Montagepersonal, beispielsweise zum Verschrauben der Längsprofile und oder zum Anschlagen der verbundenen Sektionssegmente an einen Kran ermöglicht.

Nach dem Schritt h) und vor dem Schritt k) können die weiteren Schritte eingefügt werden:
- Installieren einer bewegliche Arbeitsbühne derart, dass die bewegliche Arbeitsbühne entlang benachbarter Längsprofile der Sektionssegmente vertikal bewegbar ist,
- abschnittsweises Positionieren der beweglichen Arbeitsbühne und Verbinden der benachbarten Längsprofile im jeweiligen Abschnitt.

Für eine weitere bevorzugte Ausgestaltung wird eine Turmsektion aus einer Anzahl zwischen zwei und fünfundzwanzig Sektionssegmenten gebildet.

Die Aufgabe wird auch gelöst durch ein Verfahren zum Montieren und Errichten eines Turms für eine Windenergieanlage, welcher eine Mehrzahl von Turmsektionen umfasst, wobei wenigstens eine Turmsektion aus Sektionssegmenten gebildet ist, die aus Stahlblechen gefertigt wurden, mit den Schritten:
- Montieren und Errichten einer ersten Turmsektion aus einer Teilturmsektion mit einer Mehrzahl von Sektionssegmenten nach dem vorhergehenden Verfahren zum Montieren einer längsgeteilten Turmsektion, wobei das Flanschauflager als Fundamentanschlussteil ausgebildet ist,
- Heben einer zweiten oder weiteren Turmsektion mit Hilfe eines Krans von einem Transportfahrzeug, einem Lagerplatz oder einem Montagegestell und Absetzen der weiteren Turmsektion auf der ersten Turmsektion und
- Verbinden der unteren Flanschsegmente und/oder des unteren Flansches der weiteren Turmsektion mit den oberen Flanschsegmenten der unmittelbar darunter angeordneten Turmsektion.

Für eine weitere bevorzugte Ausgestaltung ist das Flanschauflager als Montagegestell ausgebildet.

Die Aufgabe wird im Ergebnis auch gelöst durch einen Turm, insbesondere Stahlturm, einer Windenergieanlage mit mehreren Turmsektionen, wobei zumindest eine Turmsektion aus einzelnen Sektionssegmenten besteht, wobei die zumindest eine Turmsektion und der Turm mit einer solchen Turmsektion nach dem vorstehenden Verfahren montiert und/oder errichtet wurde.

Für eine weitere bevorzugte Ausgestaltung des Turms ist an jedem Sektionssegment benachbart zum oberen Flanschsegment eine Segmentplattform angeordnet.

Zur Lösung der Aufgabe wird ein System zum Montieren einer längsgeteilten Turmsektion für einen Turm einer Windenergieanlage, welche aus einer Mehrzahl von Sektionssegmenten gebildet wird oder ist, genutzt, das wenigstens zwei Montageböcke, wobei die Montageböcke jeweils wenigstens eine Mehrzahl von Rollen und einen mechanischen, elektrischen oder hydraulischen Rollenantrieb zum Antreiben wenigstens einer Rolle aufweisen, wenigstens zwei längenveränderbare Streben, die mit einem Sektionssegment verbindbar sind, wobei die wenigstens zwei längenveränderbaren Streben jeweils einen mechanischen und/oder elektrischen Antrieb zum Variieren der wirksamen Länge der Streben aufweisen, und/oder wenigstens zwei temporäre Stützmittel zur Montage zwischen zwei Sektionssegmenten, wobei die wenigstens zwei Stützmittel jeweils einen Antrieb zum Variieren der wirksamen Länge der Stützmittel aufweisen, und wenigstens zwei Positioniermittel zum Herstellen einer scharnierartigen Verbindung zwischen zwei Sektionssegmenten umfasst.

In einer vorteilhaften Weiterbildung des Montagesystems umfasst dieses Montageböcke, die jeweils wenigstens zwei, vorzugsweise vier Rollensätze mit jeweils wenigstens zwei, vorzugsweise vier Rollen aufweisen, wobei zumindest eine Achse oder Welle eines Rollensatzes schwenkbar ausgeführt ist, sodass dessen Abstand zu einer parallelen zweiten Achse oder Welle eines zweiten Rollensatzes veränderbar ist. Hierdurch ist es auf einfache Weise möglich, die Montageböcke an verschiedene Durchmesser der Turmsektionen anzupassen sowie Unebenheiten des Bodens auszugleichen.

In einer bevorzugten Weiterbildung des Montagesystems umfasst jedes Stützmittel zwei Abschnitte, die durch ein Scharniergelenk verbunden sind, wobei der erste Abschnitt als Stützrohr und der zweite Abschnitt als Führungsrohr für den Antrieb ausgebildet ist.

In einer bevorzugten Weiterbildung des Montagesystems sind die Positioniermittel zum Herstellen einer scharnierartigen Verbindung zwischen zwei Sektionssegmenten ausgebildet, wobei das Positioniermittel ein Gabelelement und ein Stegelement umfasst, wobei das Gabelelement eine Bohrung mit einem Schlitz und das Stegelement einen Steg aufweist und wobei die Breite des Schlitzes größer als die Breite und kleiner als die Höhe des Stegs ist und wobei die Bohrung des Gabelelements einen größeren Durchmesser aufweist als die Höhe des Stegs des Stegelements.

Der Abstand der längenveränderbaren Streben, der temporären Stützmittel und der Positioniermittel kann mittels für den vorbestimmten Abstand relevanter Parameterwerte über ein lokales Steuer- und/oder Regelgerät eingegeben und/oder abgerufen werden. Dadurch wird eine noch höhere Genauigkeit erzielt. Zudem erfolgt das Einstellen reproduzierbar und in kürzerer Zeit.

Folgende Schritte sind dazu nötig: Eingeben und/oder Abrufen der für den vorbestimmten Abstand relevanten Parameterwerte an einer zentralen Bedien- und Anzeigeeinheit einer zentralen Steuerungseinheit, drahtloses Übertragen der Daten von der zentralen Steuerungseinheit an die lokalen Steuer- und/oder Regelgeräte der längenveränderbaren Streben und Starten der Antriebe des jeweiligen längenveränderbaren Streben von der zentralen Bedien- und Anzeigeeinheit zum, insbesondere simultanen, motorischen Einstellen der vorbestimmten Abstände. Mit den vorgenannten Schritten wird ebenfalls eine größere Genauigkeit und Reproduzierbarkeit erzielt. Zudem erfolgt das ferngesteuerte Einstellen schneller und mit größerer Sicherheit für das Montagepersonal.

Auch ist es möglich, die Antriebe der längenveränderbaren Streben und/oder Stützmittel mit einem insbesondere fernsteuerbaren Steuer- und/oder Regelgerät auszustatten, das mit einer Steuerungseinheit, welche eine Bedien- und Anzeigeeinheit umfasst, insbesondere drahtlos verbindbar ist.

Aus dem erfindungsgemäßen Verfahren ergeben sich insbesondere Vorteile hinsichtlich eines flexiblen Einsatzes der Kräne und somit der Krankosten. Insbesondere können für das Handling von Teilturmsektionen weniger leistungsfähige Kräne eingesetzt werden, da das Gewicht lediglich zwischen der Hälfte und zwei Dritteln des Gewichtes einer gesamten Turmsektion beträgt. So wird ein besonders leistungsfähiger hoher Kran erst zum Ende der Turmmontage für relativ kurze Zeit, nämlich für das Montieren der oberen Stahlturmsektionen und/oder der Gondel und des Rotors benötigt.

### Ausführung der Erfindung

Nachstehend ist ein Ausführungsbeispiel des Systems gemäß der Erfindung unter Bezugnahme auf die beigefügten Zeichnungen beschrieben, in denen zeigt die
- Fig. 1: eine perspektivische Gesamtansicht einer Turmsektion eines Windenergieanlagenturms,
- Fig. 2: eine Perspektivansicht einer ersten Montagephase mit einem ersten liegenden Sektionssegment,
- Fig. 3: eine Ansicht auf die Stirnseiten des ersten und zweiten Sektionssegments in einer zweiten Montagephase,
- Fig. 3A: eine Ansicht eines Details aus Fig. 3 und
- Fig. 3B: eine Perspektivansicht zu Fig. 3A,
- Fig. 4: eine Perspektivansicht einer dritten Montagephase mit den ersten beiden Sektionssegmenten,
- Fig. 5: eine Perspektivansicht einer vierten Montagephase mit dem ersten und dem zweiten Sektionssegment,
- Fig. 6: eine Perspektivansicht einer fünften Montagephase mit den ersten beiden stehenden Sektionssegmenten,
- Fig. 7: eine Perspektivansicht einer sechsten Montagephase eines segmentierten Stahlturms gemäß der Erfindung mit der ersten errichteten Turmsektion sowie eine errichtete Teilturmsektion,
- Fig. 8: eine Perspektivansicht einer siebten Montagephase mit der ersten und der zweiten errichteten Turmsektion,
- Fig. 9: eine Perspektivansicht einer achten Montagephase mit den ersten beiden verbundenen Turmsektionen und einer dritten Turmsektion,
- Fig. 10: eine Perspektivansicht einer Führungsplatte,
- Fig. 11: eine Perspektivansicht einer längenveränderbaren Strebe und
- Fig. 12: eine Perspektivansicht eines längenveränderbaren Stützmittels.

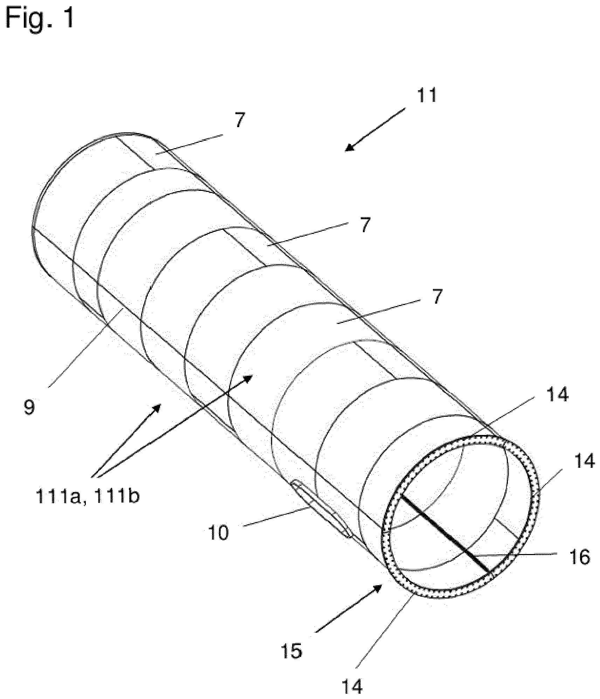

Fig. 1 zeigt eine untere Turmsektion 11 mit einer Turmzugangstüröffnung 10. Die Turmsektion 11 umfasst eine Anzahl von Sektionsabschnitten 7, die in Fachkreisen auch als "Schüsse" bezeichnet werden. Die Sektionsabschnitte 7 weisen vom Herstellungsprozess regelmäßig eine Längsschweißnaht auf. Weitere Turmsektionen 12, 13 sind, ohne die Turmzugangstüröffnung 10, entsprechend aufgebaut, wobei die Anzahl der Sektionsabschnitte 7 variieren kann. Im gezeigten Ausführungsbeispiel weist die Turmsektion 11 insgesamt neun Sektionsabschnitte 7 auf, welche an ihren Stirnseiten miteinander verschweißt sind. Die freien Stirnseiten der äußeren Sektionsabschnitte 7 einer Sektion sind jeweils mit einem Ringflansch 15 verschweißt. Es ist bekannt, anstelle geschlossener Ringflansche 15 einzelne Ringflanschsegmente 14 an die freien Stirnseiten der äußeren Sektionsabschnitte 7 einer Turmsektion 11, 12, 13 anzuschweißen. Die Fig. 1 zeigt ferner ein erstes Längsprofil 16 etwa in der 5-Uhr-Position, welches sich an der Innenseite der Wandung der Turmsektion 11 parallel zu deren Mittelachse erstreckt und mit der Wandung verschweißt ist. Neben dem gezeigten Längsprofil 16 weist die Turmsektion 11 zwei weitere, von außen nicht sichtbare Längsprofile 16 auf, die jeweils um 120° versetzt in der Rohrwandung angeordnet sind. In einem nachfolgenden Herstellungsschritt wird die Turmsektion 11 entlang einer ersten, zweiten und dritten geplanten Trennlinie 9 in drei Sektionssegmente 111 a, 111 b, 111 c geteilt, wobei die geplanten Trennlinien 9 jeweils mit den Längsprofilen 16 und mit den Stößen zwischen den Ringflanschsegmenten 14 zusammenfallen. Mit anderen Worten erfolgt der jeweilige Längsschnitt durch das Längsprofil 16 oder zwischen einem Paar von einzelnen Längsflanschen und an einem Stoß zweier Ringflanschsegmente 14, so dass die Sektionssegmente 111a, 111 b, 111 c nach dem Transport zum Montageort dort wieder über das Längsprofil 16 oder das Paar von einzelnen Längsflanschen miteinander verbunden werden können.

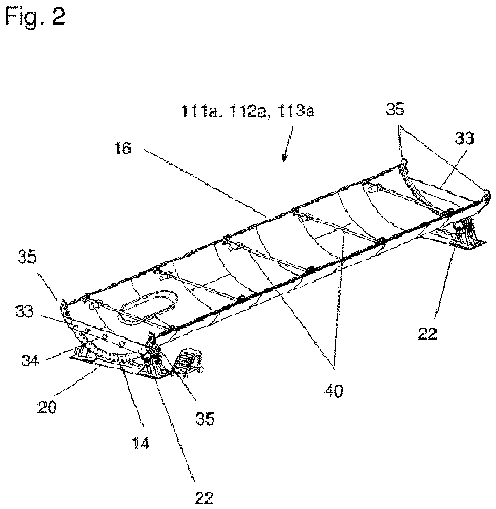

Die Fig. 2 zeigt eine Perspektivansicht einer ersten Montagephase mit einem ersten Sektionssegment 111 a, das auf zwei Montageböcken 20 mit der offenen konkaven Seite nach oben abgelegt ist, wobei der Abstand der Montageböcke 20 im Wesentlichen dem Abstand der stirnseitigen Ringflanschsegmente 14 entspricht. Wie die Fig. 2 weiter erkennen lässt, sind fünf längenveränderbare Streben 40 an den gegenüberliegenden Längsprofilen 16 des Sektionssegments 111a gehaltert und derart eingestellt, dass der Abstand der Längsprofile 16 einem vorbestimmten Maß entspricht, so dass die Längsprofile 16 mit hoher Genauigkeit parallel verlaufen. Die Transporttraversen 33 bleiben dabei zur Unterstützung im Sinne einer guten Formstabilität weiterhin montiert. Die Transporttraverse 33 besteht im Ausführungsbeispiel im Wesentlichen aus einer trapezförmigen Platte und drei pollerförmigen Zapfen 34, wobei die Platte vier Durchgangsbohrungen zur Befestigung mit einem Ringflanschsegment 14 aufweist. Die Zapfen 34 haben einen ersten zylinderförmigen Abschnitt mit einem ersten Durchmesser und einen zweiten zylinderförmigen Abschnitt mit einem größeren zweiten Durchmesser, der die Transporttraverse 33 im eingehängten Zustand gegen ein axiales Verrutschen sichert.

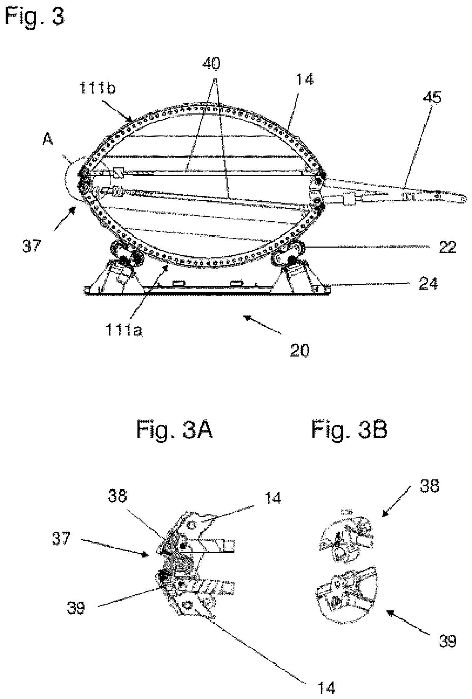

Die Fig. 3 zeigt eine Perspektivansicht einer nachfolgenden zweiten Montagephase mit dem ersten und einem zweiten Sektionssegment 111 b, welches zuvor - mittels eines nicht dargestellten Krans - in im Wesentlichen paralleler Ausrichtung der Längsseiten mit der konvexen Seite nach oben auf das erste Sektionssegment 111 a abgesetzt wurde. Mit Hilfe von Positioniermitteln 37 an einem Ende (in der Figur 3 auf der linken Seite) der stirnseitigen Ringflanschsegmente 14 wurde zuvor eine scharnierartige Verbindung des ersten und des zweiten Sektionssegments 111 a und 111b hergestellt. Die Positioniermittel 37 werden vor dem Verbinden der Sektionssegmente an diese lösbar angebracht bzw. mit diesen verschraubt, dies erfolgt bevorzugt am Montageort. Die Positioniermittel 37 könnten aber auch bereits im Herstellungswerk an den Längsseiten der Sektionssegmente angebracht worden sein.

Wie die Fig. 3 weiter erkennen lässt, sind auf der gegenüberliegenden Seite klappbare und längenveränderbare Stützmittel 45 vorgesehen und an den Ringflanschsegmenten 14 angeschlagen, wobei die klappbaren und längenveränderbaren Stützmittel 45 dort in einer ca. 5° aufgeklappten Stellung gezeigt sind. Die Fig. 3 zeigt ferner einen Montagebock 20, der im Ausführungsbeispiel zwei Stützböcke 24, die durch einen Querbalken verbunden sind, und vier Rollensätze, die jeweils vier Rollen 22 aufweisen, umfasst. Die Rollen 22 eines Rollensatzes sind auf einer gemeinsamen Welle gelagert und durch einen Rollenantrieb, der insbesondere einen Getriebemotor und vorzugsweise einen Positionssensor umfasst, gemeinsam antreibbar. Die Rollen 22 eines weiteren Rollensatzes sind auf einer gemeinsamen Welle oder Achse frei drehbar an jeweils einem Stützbock 24 gelagert. An jedem Montagebock 20 ist zumindest ein Rollensatz 20 mittels eines Schwenkantriebs schwenkbar ausgeführt, wodurch sich die Auflagetangenten der Rollen 22 an verschiedene Radien der Turmsektionen 11, 12, 13 anpassen lassen.

Die Fig. 3A zeigt einen Ausschnitt A aus Fig. 3 in vergrößerter Darstellung, nämlich das Positioniermittel 37 in gefügter Stellung. Die Fig. 3B zeigt eine perspektivische Ansicht des Positioniermittels 37 in vergrößerter Darstellung in offener Stellung. Wie die Fig. 3A und Fig. 3B erkennen lassen, besteht das Positioniermittel 37 insbesondere aus einem Paar aus einem Gabelelement 38 und einem Stegelement 39, die jeweils mit einem Sektionssegment 111a-c, 112a-c, 113a-c kraftschlüssig und/oder formschlüssig verbindbar sind, wobei das Gabelelement 38 eine Bohrung mit einem Schlitz und das Stegsegment 39 einen Steg aufweist und wobei die Breite des Schlitzes breiter ist als die Breite des Steges und schmaler als die Höhe des Steges ist. Andere konstruktiv einfachere Ausgestaltungen von Positioniermitteln 37 sind im Stand der Technik z.B. als Dorne oder Zapfen ggf. mit entsprechenden Gegenstücken bekannt, welche an den Längsseiten der Sektionssegmente 111a-c, 112a-c, 113a-c angeordnet sind. Diese konstruktiv einfacheren Ausgestaltungen im Stand der Technik, wie z.B. Dorne oder Zapfen, sind jedoch in ihrer Funktionalität eingeschränkt, so dass diese keine Fixier-, Verriegelungs- und/oder Scharnierfunktion haben.

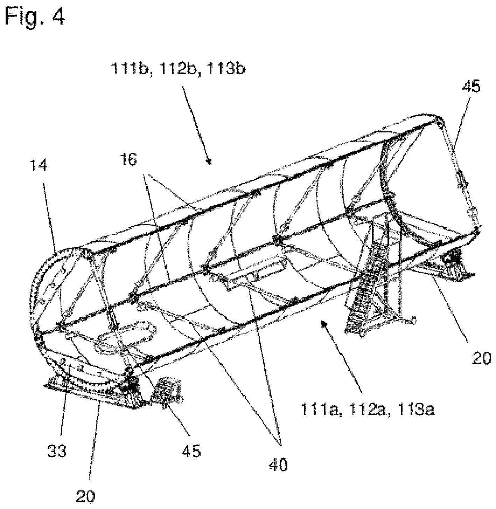

Die Fig. 4 zeigt eine Perspektivansicht einer nachfolgenden dritten Montagephase mit dem ersten und zweiten Sektionssegment 111a, 111b, 112a, 112b, 113a, 113b, wobei die klappbaren und längenveränderbaren Stützmittel 45 dort in einer vollständig aufgeklappten Stellung, d.h. in gestreckter Stellung gezeigt sind, so dass eine 2/3-Turmsektion als Teilturmsektion 211 gebildet ist.

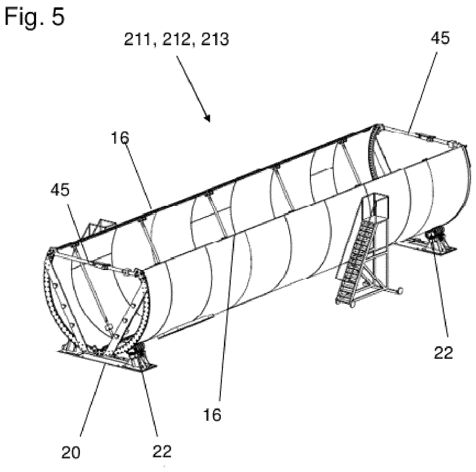

In der Fig. 5 ist die Konstellation aus Fig. 4 in einer nachfolgenden vierten Montagephase gezeigt, wobei die Teilturmsektion 211, 212, 213 mittels der angetriebenen Rollen 22 der Montageböcke 20 um 60° gedreht wurde, so dass die noch offene Seite der Teilturmsektion 211 nach oben zeigt.

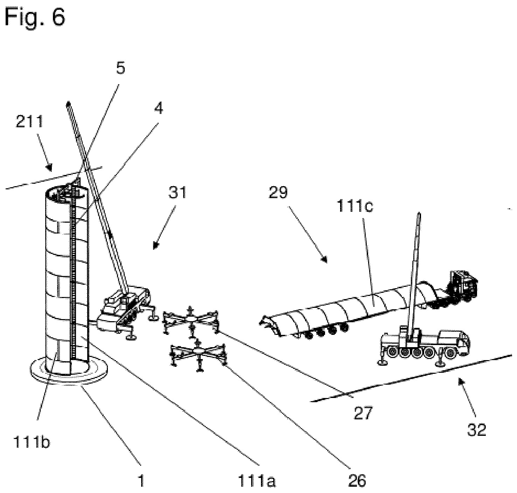

Die Fig. 6 zeigt eine fünfte Phase des Montierens der ersten Turmsektion 11 gemäß der Erfindung mit dem ersten Sektionssegment 111a und dem bereits verbundenen zweiten Sektionssegment 111 b, welche als Teilturmsektion 211 bereits mittels der Kräne 31, 32 aus einer horizontalen Lage in eine vertikal Lage verbracht wurde. Neben der Steigleiter 4 ist eine Montagetraverse 5 gezeigt, welche das erste Sektionssegment 111a und das zweite Sektionssegment 111 b durch Verschrauben der zugehörigen Ringflanschsegmente 14 miteinander verbindet. An der Montagetraverse 5 kann auch eine nicht dargestellte bewegliche Arbeitsbühne lösbar gehaltert werden. Eine solche bewegliche Arbeitsbühne wäre dabei entlang benachbarter Längsprofile 16 des ersten Sektionssegments 111a und zweiten Sektionssegments 111 b vertikal bewegbar, so dass ein abschnittsweises Positionieren der bewegliche Arbeitsbühne durch das Montagepersonal zum Verbinden der benachbarten Längsprofile im jeweiligen Abschnitt, beispielsweise mittels Schraubverbindungen einfach und sicher möglich ist. Das dritte Sektionssegment 111c liegt auf dem Transportfahrzeug 29 für die weitere Montage bereit.

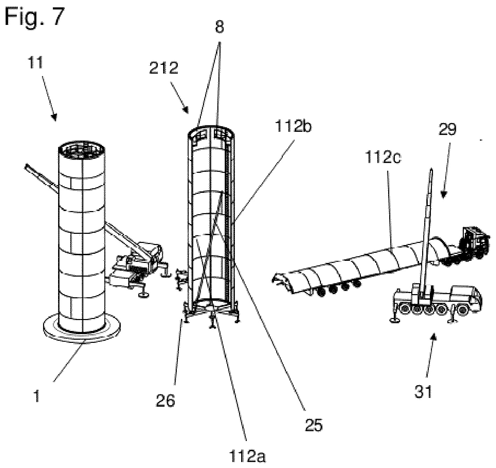

Die Fig. 7 zeigt eine sechste Phase des Montierens bzw. des Errichtens eines segmentierten Stahlturms gemäß der Erfindung mit der ersten fertiggestellten Turmsektion 11 und einer zweiten Teilturmsektion 212, umfassend ein erstes Sektionssegment 112a und ein zweites Sektionssegment 112b. Während die erste Turmsektion 11 direkt auf dem Fundament 1 fertiggestellt wurde, wird die zweite Turmsektion 12 auf einem Montagegestell 26 fertiggestellt. Wie die Fig. 7 weiter zeigt, ist das Sektionssegment 112b durch eine Stützstrebe 25 gesichert. Das dritte Sektionssegment 112c liegt auf dem Transportfahrzeug 29 für die weitere Montage bereit. Wie die Fig. 7 zudem erkennen lässt, sind benachbart zu den oberen Ringflanschsegmenten 14 der Sektionssegmente 111 a, 111 b, 112a, 112b, 113a, 113b Segmentplattformen 8 angeordnet. Hierdurch ist eine besonders gute Zugänglichkeit und sicheres Arbeiten des Montagepersonals beim Verbinden der Ringflanschsegmente 14 ermöglicht.

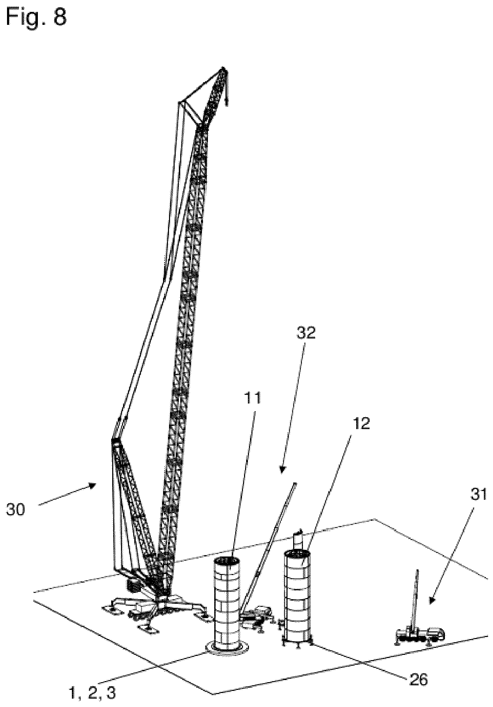

Die Fig. 8 zeigt eine siebte Phase des Montierens bzw. des Errichtens eines segmentierten Stahlturms mit der ersten und der zweiten Turmsektion 11, 12. Benachbart zu den Turmsektionen 11, 12 ist nunmehr ein weiterer, nämlich dritter Kran 30, als sogenannter Hauptkran positioniert. Der dritte Kran 30 ist erheblich höher und schwerer als die für die Turmsektionsvormontage genutzten mobilen Kräne 31, 32, insbesondere ist der dritte Kran 30 geeignet, vormontierte Teilturmsektionen 211, 212, 213 sowie Turmsektionen 11, 12, 13 anzuheben und übereinander anzuordnen.

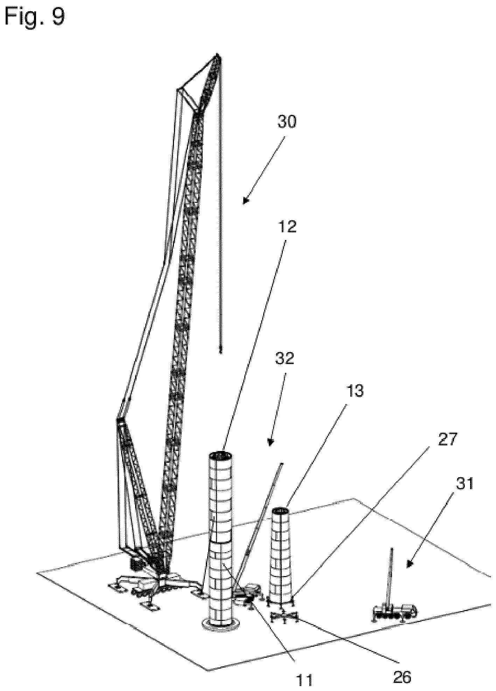

Die Fig. 9 zeigt eine achte Phase des Montierens bzw. des Errichtens eines segmentierten Stahlturms, wobei die erste und die zweite Turmsektion 11, 12 bereits übereinander angeordnet und miteinander verbunden, insbesondere verschraubt sind. Die dritte fertiggestellte Turmsektion 13 steht auf dem Montagegestell 27 bereit, um vom dritten Kran 30 angehoben und auf der zweiten Turmsektion 12 abgesetzt zu werden.

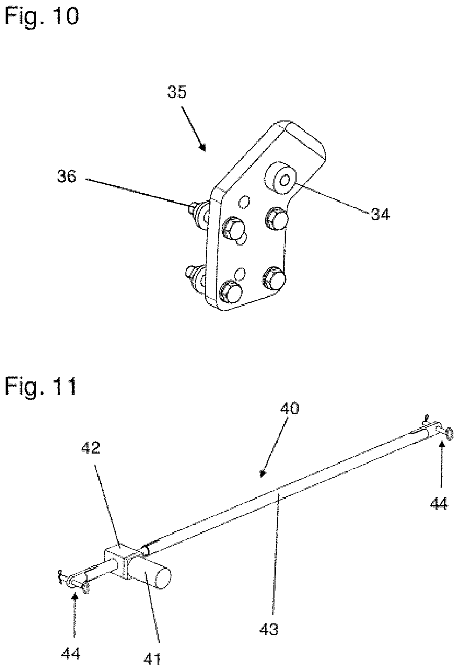

Die Fig. 10 zeigt eine Perspektivansicht einer Führungsplatte 35, welche Durchgangsbohrungen für Anschlagschrauben 36 zum Verbinden mit einem Ringflanschsegment 14 aufweist. Wie die Fig. 10 weiter erkennen lässt, weist die Führungsplatte 35 einen Zapfen 34 für eine Verbindung mit einem Stützmittel 45 auf.

Die Fig. 11 zeigt eine Perspektivansicht einer Strebe 40, welche im Ausführungsbeispiel als längenveränderbare Spann- und Stützstange ausgebildet ist. Wie der Fig. 11 zu entnehmen ist, weist die Strebe 40 einen Linearantrieb auf, der einen Motor 41, ein Getriebe 42 und eine nicht dargestellte Gewindespindel umfasst. Die Gewindespindel ist in einem Führungsrohr 43 geführt und gelagert. An ihren distalen Enden weist die Strebe 40 jeweils eine Durchgangsbohrung zum Anschluss beispielsweise einer Führungsplatte 35 mittels eines Splintbolzens 44 auf.

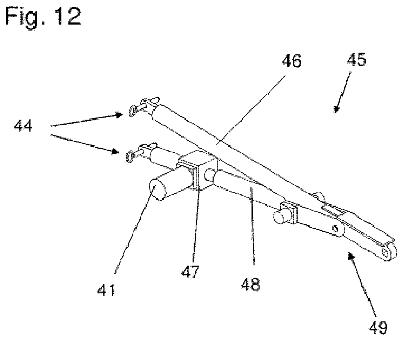

Die Fig. 12 zeigt eine Perspektivansicht eines Stützmittels 45, welches im Ausführungsbeispiel als klappbares und längenveränderbares Stützmittel 45 ausgebildet ist. Wie der Fig. 12 zu entnehmen ist, weist das Stützmittel 45 einen Linearantrieb auf, der einen Motor 41, ein Getriebe 47 und eine nicht dargestellte Gewindespindel umfasst. Die Gewindespindel ist in einem Führungsrohr 48 geführt und gelagert. An seinen distalen Enden weist das Stützmittel 45 wiederum jeweils eine Durchgangsbohrung zum Anschluss einer Führungsplatte 35 mittels eines Splintbolzens 44 auf.

### Bezugszeichenliste

- 1: Fundament
- 2: Ringflanschauflager
- 3: Fundamentanschlussteil
- 4: Steigleiter
- 5: Montagetraverse
- 7: Sektionsabschnitt
- 8: Segmentplattform
- 9: Trennlinie
- 10: Turmzugangstüröffnung
- 11: Turmsektion
- 12: Turmsektion
- 13: Turmsektion
- 14: Ringflanschsegment
- 15: Ringflansch
- 16: Längsprofil
- 20: Montagebock
- 22: Rollen
- 24: Stützbock
- 25: Stützstrebe
- 26: Montagegestell
- 27: Montagegestell
- 29: Transportfahrzeug
- 30: Kran
- 31: Kran
- 32: Kran
- 33: Transporttraverse
- 34: Zapfen
- 35: Führungsplatte
- 36: Anschlagschrauben
- 37: Positioniermittel
- 38: Gabelelement
- 39: Stegelement
- 40: Strebe
- 41: Motor
- 42: Getriebe
- 43: Führungsrohr
- 44: Splintbolzen
- 45: Stützmittel
- 46: Stützrohr
- 47: Getriebe
- 48: Führungsrohr
- 49: Scharniergelenk
- 111a: erstes Sektionssegment
- 111b: zweites Sektionssegment
- 111c: drittes Sektionssegment
- 112a: erstes Sektionssegment
- 112b: zweites Sektionssegment
- 112c: drittes Sektionssegment
- 113a: erstes Sektionssegment
- 113b: zweites Sektionssegment
- 113c: drittes Sektionssegment
- 211: Teilturmsektion
- 212: Teilturmsektion
- 213: Teilturmsektion

## Patentansprüche

1. Verfahren zum Montieren einer längsgeteilten Turmsektion (11, 12, 13) für einen Turm einer Windenergieanlage, welche aus mehreren Sektionssegmenten (111a-c, 112a-c, 113a-c) gebildet wird, jeweils umfassend zwei stirnseitige Ringflanschsegmente (14) und zwei Längsprofile (16) an den Längsseiten zum Verbinden benachbarter Sektionssegmente (111a-c, 112a-c, 113a-c) mit den Schritten:
a) Bereitstellen einer Mehrzahl von Sektionssegmenten (111a-c, 112a-c, 113a-c),
b) Bereitstellen, Positionieren und Ausrichten von wenigstens zwei Montageböcken (20) und Bereitstellen von wenigstens zwei Positioniermitteln (37),
c) Verbringen des ersten Sektionssegments (111 a, 112a, 113a) in seiner Längserstreckung mit seiner Außenseite nach unten gerichtet auf die Montageböcke (20) von einem Lagerplatz oder einem Transportfahrzeug (29) mittels wenigstens eines Krans (30, 31, 32),
d) paarweises Anschlagen der Positioniermittel (37) an den Längsseiten des ersten Sektionssegments (111a, 112a, 113a) und wenigstens eines weiteren Sektionssegments (111b, 112b, 113b),
e) Verbringen des wenigstens einen weiteren Sektionssegments (111b, 112b, 113b) in im Wesentlichen horizontaler Ausrichtung oberhalb des ersten Sektionssegments (111a, 112a, 113a) von einem Lagerplatz oder einem Transportfahrzeug (29) mittels des wenigstens einen Krans (30, 31, 32),
f) Absenken des wenigstens einen weiteren Sektionssegments (111b, 112b, 113b),
g) Einfädeln der Positioniermittel (37) an einer ersten Längsseite des wenigstens einen weiteren Sektionssegments (111b, 112b, 113b) in die Positioniermittel (37) an der benachbarten Längsseite des zuvor positionierten ersten Sektionssegments (111a,b, 112a,b, 113a,b),
h) Verbinden der Längsprofile (16) benachbarter Längsseiten des ersten und des wenigstens einen weiteren Sektionssegments (111a,b, 112a,b, 113a,b) zu einer Teilturmsektion (211, 212, 213),
i) Bereitstellen eines Flanschauflagers, insbesondere eines Ringflanschauflagers (2), eines Montagegestells (26, 27), eines Fundamentanschlussteiladapters und/oder eines Fundamentanschlussteils (3),
j) Heben der Teilturmsektion (211, 212, 213) von den Montageböcken (20), Aufrichten und Verbringen der Teilturmsektion (211, 212, 213) in vertikaler Ausrichtung auf das Flanschauflager, mittels des wenigstens einen Krans (30, 31, 32),
k) Verbinden der Teilturmsektion (211, 212, 213) mit dem Flanschauflager,
l) Verbringen wenigstens eines weiteren Sektionssegments (111c, 112c, 113c) in vertikaler Ausrichtung auf das Flanschauflager von einem Lagerplatz oder einem Transportfahrzeug (29) mittels des wenigstens einen Krans (30, 31, 32),
m) Verbinden des wenigstens einen weiteren Sektionssegments (111c, 112c, 113c) mit dem Flanschauflager und Verbinden der Längsprofile (16) des wenigstens einen weiteren Sektionssegments (111c, 112c, 113c) mit den benachbarten Längsprofilen (16) der Sektionssegmente (111a,b, 112a,b, 113a,b) der Teilturmsektion (211, 212, 213).

2. Verfahren nach Anspruch 1, **dadurch gekennzeichnet, dass** vor dem Schritt d) die zusätzlichen Schritte erfolgen,
- Bereitstellen einer Mehrzahl von längenveränderbaren Streben (40),
- Montieren der längenveränderbaren Streben (40) an direkt gegenüberliegenden Längsprofilen (16) jedes Sektionssegments (111a, 112a, 113a, 111b, 112b, 113b, 111c, 112c, 113c) und/oder
- Einstellen der längenveränderbaren Streben (40), so dass der Abstand der jeweiligen Längsprofile (16) einem vorbestimmten Maß entspricht.

3. Verfahren nach einem der Ansprüche 1 oder 2, **dadurch gekennzeichnet, dass** vor dem Schritt e) die zusätzlichen Schritte erfolgen:
- Montieren von Führungsplatten (35) an den Flanschsegmenten des ersten Sektionssegments (111a, 112a, 113a),
- Einfädeln des wenigstens einen weiteren Sektionssegments (111b, 112b, 113b) zwischen die Führungsplatten (35) des ersten oder des zuvor auf den Montageböcken (20) abgelegten Sektionssegments (111a, 112a, 113a).

4. Verfahren nach einem der Ansprüche 1 bis 3, **dadurch gekennzeichnet, dass** nach dem Schritt f) und vor dem Schritt g) die zusätzlichen Schritte erfolgen:
- Bereitstellen von wenigstens zwei längenveränderbaren Stützmitteln (45),
- Anschlagen jeweils eines längenveränderbaren Stützmittels (45) an der den Positioniermitteln (37) gegenüberliegenden zweiten Längsseite des ersten und des wenigstens einen weiteren Sektionssegments (111a,b, 112a,b, 113a,b),
- Anheben der freien Längsseite des wenigstens einen weiteren Sektionssegments (111b, 112b, 113b) mittels des wenigstens einen Krans (30, 31, 32),
- Aufklappen und/oder Ausfahren der Stützmittel (45) auf ein vorbestimmtes Maß.

5. Verfahren nach einem der Ansprüche 1 bis 4, **dadurch gekennzeichnet, dass** nach dem Schritt g) ein zusätzlicher Schritt erfolgt:
- Drehen der verbundenen Sektionssegmente (111a,b, 112a,b, 113a,b) auf den Montageböcken (20), bis die äußeren Längsseiten der verbundenen Sektionssegmente (111a,b, 112a,b, 113a,b) in einer Ebene oberhalb ihres Schwerpunkts, bevorzugt in einer horizontalen Ebene liegen und eine nach oben offene Teilturmsektion (211, 212, 213) bilden.

6. Verfahren nach einem der Ansprüche 1 bis 5, **dadurch gekennzeichnet, dass** nach dem Schritt h) und vor dem Schritt k), die Schritte erfolgen:
- Installieren einer bewegliche Arbeitsbühne derart, dass die bewegliche Arbeitsbühne entlang benachbarter Längsprofile (16) der Sektionssegmente (111a-c, 112a-c, 113a-c) vertikal bewegbar ist,
- abschnittsweises Positionieren der beweglichen Arbeitsbühne und Verbinden der benachbarten Längsprofile (16) im jeweiligen Abschnitt.

7. Verfahren nach einem der vorangegangenen Ansprüche, **dadurch gekennzeichnet, dass**
eine Turmsektion (11, 12, 13) aus einer Anzahl zwischen zwei und fünfundzwanzig Sektionssegmenten (111a-c, 112a-c, 113a-c) gebildet wird.

8. Verfahren zum Montieren und Errichten eines Turms für eine Windenergieanlage, welcher eine Mehrzahl von Turmsektionen (11, 12, 13) umfasst, wobei wenigstens eine Turmsektion (11, 12, 13) aus Sektionssegmenten (111a-c, 112a-c, 113a-c) gebildet ist, mit den Schritten:
- Montieren und Errichten einer ersten Turmsektion (11) aus Sektionssegmenten (111a-c, 112a-c, 113a-c) nach einem der Ansprüche 1 bis 7, wobei das Flanschauflager als Fundamentanschlussteil (3) ausgebildet ist,
- Heben einer zweiten oder weiteren Turmsektion (12, 13) mit Hilfe eines Krans (30, 31, 32) von einem Transportfahrzeug (29), einem Lagerplatz oder einem Montagegestell (26, 27) und Absetzen der weiteren Turmsektion (12, 13) auf der ersten Turmsektion (11) und
- Verbinden der unteren Flanschsegmente (14) oder des unteren Flansches (15) der weiteren Turmsektion (12, 13) mit den oberen Flanschsegmenten (14) der unmittelbar darunter angeordneten Turmsektion (11, 12, 13).

9. Verfahren zur Montage eines Turms für eine Windenergieanlage nach Anspruch 8 mit den Schritten:
- Montieren und Errichten der zweiten oder weiteren Turmsektion (12, 13) aus Sektionssegmenten (111a-c, 112a-c, 113a-c) nach einem der Ansprüche 1 bis 7, wobei das Flanschauflager als Montagegestell (26, 27) ausgebildet ist.

10. Turm einer Windenergieanlage mit mehreren Turmsektionen (11, 12, 13), wobei zumindest eine Turmsektion (11, 12, 13) aus einzelnen Sektionssegmenten (111a-c, 112a-c, 113a-c) besteht, **dadurch gekennzeichnet, dass**
zumindest eine Turmsektion (11, 12, 13) nach einem Verfahren nach einem der Ansprüche 1 bis 7 montiert und/oder errichtet wurde.

11. Turm nach Anspruch 10, **dadurch gekennzeichnet, dass** der Turm nach einem Verfahren nach Anspruch 8 oder 9 errichtet wurde.

12. Turm nach Anspruch 10 oder 11, **dadurch gekennzeichnet, dass** an jedem Sektionssegment (111a-c, 112a-c, 113a-c) benachbart zum oberen Flanschsegment eine Segmentplattform (8) angeordnet ist.

13. System zum Montieren einer längsgeteilten Turmsektion (11, 12, 13) für einen Turm einer Windenergieanlage, welche aus einer Mehrzahl von Sektionssegmenten (111a-c, 112a-c, 113a-c) gebildet wird oder ist, umfassend:
- wenigstens zwei Montageböcke (20), wobei die Montageböcke (20) jeweils wenigstens eine Mehrzahl von Rollen (22) und einen mechanischen, elektrischen oder hydraulischen Rollenantrieb zum Antreiben wenigstens einer Rolle (22) aufweisen,
- wenigstens zwei längenveränderbare Streben (40), die mit einem Sektionssegment (3) verbindbar sind, wobei die wenigstens zwei längenveränderbaren Streben (40) jeweils einen mechanischen und/oder elektrischen Antrieb zum Variieren der wirksamen Länge der Streben (40) aufweisen, und/oder
- wenigstens zwei temporäre Stützmittel (45) zur Montage zwischen zwei Sektionssegmenten (111a-c, 112a-c, 113a-c), wobei die wenigstens zwei Stützmittel (45) jeweils einen Antrieb zum Variieren der wirksamen Länge der Stützmittel (45) aufweisen, und
- wenigstens zwei Positioniermittel (37) zum Herstellen einer scharnierartigen Verbindung zwischen zwei Sektionssegmenten (111a-c, 112a-c, 113a-c).

14. System nach Anspruch 13, **dadurch gekennzeichnet, dass**
jeder Montagebock (20) wenigstens zwei Rollensätze mit jeweils wenigstens zwei Rollen (22) umfasst, wobei zumindest eine Achse oder Welle eines Rollensatzes schwenkbar ausgebildet ist, sodass dessen Abstand zu einer parallelen zweiten Achse oder Welle eines zweiten Rollensatzes veränderbar ist.

15. System nach Anspruch 13, **dadurch gekennzeichnet, dass**
jedes Stützmittel (45) zwei Abschnitte umfasst, die durch ein Scharniergelenk (49) verbunden sind, wobei der erste Abschnitt als Stützrohr (46) und der zweite Abschnitt als Führungsrohr (48) für den Antrieb ausgebildet ist.

16. System nach Anspruch 13, **dadurch gekennzeichnet, dass**
das Positioniermittel (37) ein Gabelelement (38) und ein Stegelement (39) umfasst, wobei das Gabelelement (38) eine Bohrung mit einem Schlitz und das Stegelement (39) einen Steg aufweist und die Breite des Schlitzes größer als die Breite und kleiner als die Höhe des Stegs ist und die Bohrung des Gabelelements (38) einen größeren Durchmesser aufweist als die Höhe des Stegs des Stegelements (39).
